Europäisches Patentamt

European Patent Office

Office européen des brevets

(19)

(11) Publication number:

0 288 271
A2

(12) # EUROPEAN PATENT APPLICATION

(21) Application number: 88303566.9

(22) Date of filing: 20.04.88

(51) Int. Cl.4: C 09 K 17/00

(30) Priority: 24.04.87 US 42337

(43) Date of publication of application:
26.10.88 Bulletin 88/43

(84) Designated Contracting States:
AT BE CH DE ES FR GB GR IT LI LU NL SE

(71) Applicant: POLYSAR LIMITED
Sarnia Ontario N7T 7M2 (CA)

(72) Inventor: Josty, Peter Lyn
1465 Lakeshore Road
Sarnia Ontario (CA)

Pole, Ernest George
1862 Lakeland Avenue
Sarnia Ontario (CA)

Thompson, Ronald James
1159 Cathcart Boulevard
Sarnia Ontario (CA)

(74) Representative: Jukes, Herbert Lewis et al
Swann, Elt & Company 31 Beaumont Street
Oxford OX1 2NP (GB)

(54) Anticrusting.

(57) It is known to treat land with various chemicals to prevent the formation of surface crusting. Generally, these compounds are expensive. Applicant has found that surface crusting may be significantly reduced by coating the ground with a highly filled compound.

EP 0 288 271 A2

Bundesdruckerei Berlin

### Description

## ANTICRUSTING

The present invention relates to a process to reduce the crusting in soil. More particularly, the present invention relates to a method to reduce the crusting in soils having a small particle size. This may be due to the type of soil per se, such as clays, clay-loam, and marl or silt soils which are prone to crusting problems, or it may result from overworking the soil.

It is important to draw a distinction between soil crusting and compaction. Soil compaction is caused by compressive forces on the soil such as driving heavy equipment. Soil compaction may extend down below the top few centimeters of the soil to greater depths. Soil crusting is a surface phenomenon usually caused by the soil fines rising to the surface of the soil due to kinetic energy, usually from water, acting on the soil. This segregation of the soil into an upper surface of fine particles and a lower layer of coarser-size particles results in the formation of a crust. The resulting crust tends to be a hard impermeable layer, reducing water penetration into the soil and slowing the rate of soil drying.

There have been a number or proposals to reduce the crusting of soil. U.S. Patent 4,208,973 issued June 24, 1980, assigned to Nalco Chemical Company, discloses the use of polydiallyl dimethyl ammonium chloride or a polymer of dimethlyl amine/epichlorohydrin dissolved in water as agents to prevent or reduce the crusting of soil. The Nalco patent proposes the use of different types of polymers than those of the present invention. The present invention requires the use of relatively large amounts of filler which is not disclosed in the Nalco patent.

The article "APS': Good Results in Early Trials" by William S. Peavy in American Vegetable Grower, September 1985, pages 16, 33 and 34, discloses the use of ammonium polysulfide as an anticrustant. The present invention does not contemplate such a polymer. Furthermore, the article does not disclose the use of fillers as required in the present invention.

U.S. Patent 3,281,987 issued November 1, 1966 assigned to Union Carbide, discloses the use of from 0.5 to 100 lb. per acre of cellulose compounds as a soil additive to reduce crusting. These additives are not encompassed by the present invention. The patent does not suggest that high amounts of filler be used as required by the present invention.

U.S. 3,261,127 issued July 19, 1966, assigned to Chevron Research Company, discloses treating a soil surface with from 0.02 to 0.12 gal. per yd.$^2$ of a 25 to 70 percent emulsion of a liquid polybutene. The liquid polybutene has an average molecular weight from 1100 to 2800. The polymers contemplated by the present invention are solid polymers and not liquid polymers. The polymers of the present invention must be capable of forming a film.

Although the above art has been available for a number of years, it does not appear to have been widely accepted. This may be due to a number of factors, not the least of which includes the highly pragmatic nature of farming and the cost of the treatment. The present invention seeks to resolve the gulf between these elements by providing a highly filled, and thus less expensive, compound.

The present invention provides a process to maintain the penetration resistance of a treated surface of a soil having a small particle size from 140 to 240 grams as measured by a penetration resistance probe, characterized by applying from 0.06 to 0.14 Kg/m$^2$, by dry weight, of a compound comprising per 100 parts by dry weight of an aqueous dispersion or emulsions, containing from 35 to 70 weight percent of one or more film forming polymers having a Tg of less than 35°C and selected from:

   a) polymers of: from 20 to 80 weight percent of a C$_{4-6}$ conjugated diolefin, which may be unsubstituted or substituted by a chlorine atom; from 80 to 20 weight percent of a mixture comprising: from 100 to 60 weight percent of a C$_{8-12}$ vinyl aromatic monomer which may be unsubstituted or substituted by a C$_{1-4}$ alkyl radical or a chlorine or bromine atom; and up to 40 weight percent of a C$_{3-8}$ alkenyl nitrile; and optionally from 0.5 to 10 weight percent of one or more monomers selected from:

   i) C$_{3-9}$ ethylenically unsaturated carboxylic acids or C$_{1-8}$ alkyl or C$_{1-8}$ alkanol esters thereof:
   ii) C$_{3-9}$ ethylenically unsaturated aldehydes
   iii) amides of C$_{3-9}$ ethylenically unsaturated acids which may be unsubstituted or substituted at the nitrogen atom by up to two C$_{1-4}$ alkyl or C$_{1-4}$ alkanol radicals;

   b) polymers of: from 1 to 40 weight percent of at least one C$_{2-4}$ mono olefin; from 99 to 60 weight percent of an alkenyl or alkenol ester of a C$_{1-8}$ saturated carboxylic acid; C$_{1-8}$ alkyl and alkanol esters of C$_{3-6}$ ethylenically unsaturated carboxylic acids, and optionally from 0.5 to 10 weight percent of one or more monomers selected from :

   (i) C$_{3-9}$ ethylenically unsaturated carboxylic acids or C$_{1-8}$ alkyl or C$_{1-8}$ alkanol esters thereof:
   ii) C$_{3-9}$ ethylenically unsaturated aldehydes;
   iii) amides of C$_{3-9}$ ethylenically unsaturated acids which may be unsubstituted or substituted at the nitrogen atom by up to two C$_{1-4}$ alkyl or C$_{1-4}$ alkanol radicals;

   c) polymers of: from 60 to 99.5 weight percent of a C$_{1-8}$ alkyl or alkanol ester of acrylic or methacrylic acid; and from 0.5 to 40 weight percent of a C$_{3-8}$ ethylenically unsaturated carboxylic acid;

   d) polymers of: from 5 to 35 weight percent of a C$_{3-8}$ alkenyl nitrile; from 95 to 65 weight percent of a C$_{4-6}$ conjugated diolefin; and optionally from 0.5 to 10 weight percent of one or more monomers selected from :

i) $C_{3-9}$ ethylenically unsaturated carboxylic acids or $C_{1-8}$ alkyl or $C_{1-8}$ alkanol esters thereof:

ii) $C_{3-9}$ ethylenically unsaturated aldehydes

iii) amides of $C_{3-9}$ ethylenically unsaturated acids which may be unsubstituted or substituted at the nitrogen atom by up to two $C_{1-4}$ alkyl or $C_{1-4}$ alkanol radicals.

e) polyvinyl chloride;

f) copolymers of ethylene and propylene; from 75 to 800 parts by weight of a particulate filler.

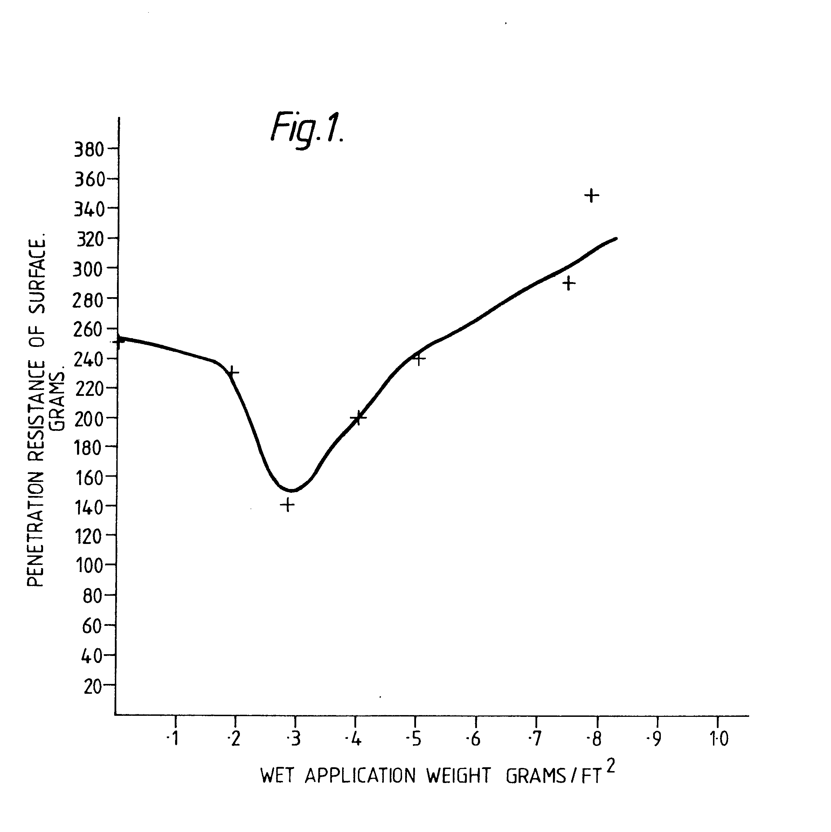

Figure 1 is a plot of the penetration resistance to the nearest 10 grams of soil treated in accordnce with the present invention, as a function of coat weight.

As used in this specification, the term penetration resistance refers to the penetration resistance of the soil coated with the compounds of the present invention.

Polymeric binders may in accordance with the present invention may be film forming and have a Tg of less than 35, preferably less than 20°C. The compositions of the present application may contain, in addition to the polymer, from 75 up to 800 parts by weight per 100 parts by weight of polymer of a filler. Under the conditions of use and upon drying, the polymer and filler in the compositions of the present invention should form a light, friable surface coating.

Without wishing to be bound by theory, it is believed that this coating absorbs the kinetic energy applied to the soil surface by water, leaving the surface relatively free from the upward migration of the fines in the soil.

Some binders comprise latices of copolymers comprising from 20 to 80 preferably 55 to 80 weight percent of a conjugated diolefin and from 80 to 20, preferably from 45 to 20 weight percent of a vinyl aromatic monomer. Ter-polymers further comprising up to 10, preferably not more than 5, weight percent of one or more of functional monomers may be present.

Some $C_{4-6}$ conjugated diolefins are butadiene, isoprene and chloroprene. Some vinyl aromatic monomers are styrene and alpha methyl styrene. Some functional monomers may be present in an amount from 0.5 to 10 weight percent and may be at least one monomer selected from : acrylic acid, methacrylic acid, fumaric acid, itaconic acid, cinnamic acid, methyl acrylate, methyl methacrylate, ethyl acrylate, ethyl methacrylate, hydroxy ethyl acrylate, hydroxy ethyl methacrylate, ethylhexyl acrylate, ethylhexyl methacrylate, acrylamide, N-methyl acrylamide, N-ethyl acrylamide, methylacrylamide, N-methyl methylacrylamide, N-ethyl methacrylamide, N-methylol acrylamide, N-methylol methacrylamide, acrolein, methacrolein and cininamaldehyde.

Latices of the above polymers may comprise latices of styrene-butadiene polymers and latices of functional, usually carboxylated, styrene butadiene polymers.

Some latices may comprise latices of co-polymers of from 1 to 40, preferably from 10 to 25 weight percent of one or more $C_{2-4}$ mono olefins and from 99 to 60, preferably from 90 to 75 weight percent of one or more monomers selected from : $C_{2-8}$ alkenyl or alkenol esters of $C_{1-8}$ saturated acids, and $C_{1-8}$ alkyl or alkanol esters of $C_{3-6}$ ethylenically unsaturated carboxylic acids, and the polymers of the foregoing monomers further comprising 10, preferably less than 5 weight percent of one or more functional monomers listed above. Some $C_{2-4}$ mono olefins are ethylene and propylene. The most commonly available alkenyl ester of a $C_{1-8}$ saturated carboxylic acid is vinyl acetate. The most commonly available $C_{1-8}$ alkyl and alkenol esters of $C_{3-6}$ ethylenically unsaturated carboxylic acids are the ester of acrylic and methacrylic acid.

The latex may be an acrylate latex. Some contain polymers comprising from 60 to 99.5 weight percent of a $C_{1-8}$ alkyl or alkanol (hydroxy alkyl) ester of acrylic a methacrylic acid and from 0.5 to 40 weight percent of a $C_{3-8}$ ethylenically unsaturated carboxylic acid. Some esters of acrylic and methacrylic acid are methyl acrylate, methyl methacrylate, ethyl acrylate, ethyl methacrylate, hydroxy ethyl acrylate, hydroxy ethyl methacrylate, ethylhexyl acrylate, and ethylhexyl methacrylate. Some ethylenically unsaturated carboxylic acids are acrylic acid, methacrylic acid, itaconic acid, and fumaric acid.

The latex may be a latex of a nitrile or carboxylated nitrile polymer. The polymer in the latex may comprise from 5 to 35, preferably from 20 to 35, weight percent of a $C_{2-8}$ alkenyl nitrile, and from 95 to 65, preferably from 80 to 65, weight percent of a $C_{4-6}$ conjugated diolefin, or the polymer may comprise a terpolymer of the foregoing nitrile and diolefin monomers and up to 10, generally not more than 5, weight percent of one or more of the listed functional monomers.

The latex may be a latex of polyvinyl chloride or a latex of an ethylene propylene co-polymer.

In some instances it may be desirable to soften the polymer using small amounts of plasticizers and/or extending oils. In some cases this improves the film forming properties of the polymer in the latex. Generally suitable extending oils or plasticizers such as the phthalate esters are relatively expensive and may not be environmentally desirable. Thus, it is usually preferable to select a latex of a polymer having a Tg of less than 20°C.

Compositions for use in accordance with the present invention may comprise 75 to 800, preferably from 300 to 600, parts by weight per 100 parts by weight of polymer of one or more of particulate fillers. The filler may be any suitable particulate filler, e.g. calcium carbonate, clay, stone dust, carbon black, micaflakes, slaked lime, wood flour, sawdust, cellulose, starch or a mixture thereof. The fillers may also be polymeric resins , e.g. polystyrene or unplasticized PVC. The filler may be compounded with the latex in accordance with good compounding practice. The filler may be added to the latex directly, or it may be added as an aqueous slurry. Care should be taken not to cause the latex to coagulate or to become very sensitive to shear. In some cases it may be advantageous to add small amounts of surfactant and/or dispersing agent to the latex or compound to reduce the potential for the compound becoming unstable. Suitable dispersants and emulsifiers are well known in the art and are listed in a number of texts such as McCutcheon's Detergents and Emulsifiers,

3

published annually, McCutcheon Division of McPublishing Co. If used, emulsifiers and/or dispersing agents are present in a total amount of usually less than 2 parts by weight (active) per 100 parts by weight of polymer.

Commercially available latices generally have a solids content from 40 to 65 percent by weight. The resulting compound may have a solids content up to 80 percent, preferably from 50 to 70, most preferably from 55 to 65 percent by weight. The resulting compound may be applied to the soil using conventional application methods and equipment, preferably spray equipment. Care should be taken to avoid using a compound with so high a solids content that the spray nozzles become clogged. Furthermore, the spray apparatus should be thoroughly flushed immediately subsequent to use.

The compound may be applied to the soil at dry coat weights from 0.06 to 0.14 $Kg/m^2$, preferably 0.08 to 0.12 $Kg/m^2$. This should, depending upon the type and condition of the soil, result in a soil having a penetration resistance, and measured with a probe of from 140 to 240 g, preferably from 140 to 200 g.

EXAMPLES

The following examples are intended to illustrate the invention and not to limit it.

Example 1

A compound was prepared in accordance with the following formula:

|  | Dry parts by wt. | Wet parts by wt. |
|---|---|---|
| An experimental carboxylated styrene butadiene latex containing 50% polymer solids having a bound Styrene content of 25%, and adapted to accept filler | 101.5 | 207.00 |
| $K_2CO_3$ | 0.25 | 1.25 |
| Calcium Carbonate (Pulprowhite*) | 300.00 | 300.00 |
| Black (carbon black) | 1.0 | 1.776 |
| Water - to 50% solids | | |
|  | 402.75 | 805.50 |

Thickener - to obtain a viscosity of 800-900 cps.

A series of 8-25x25 cm planting trays with drainage holes in the bottom were filled with 2500 grams of damp clay soil from Lambton County. The soil was smoothed and lightly compacted with a sheet of cardboard. The trays were uncoated or coated with various coat weights of the above compound. The trays were placed in an East-West row on the roof of the core of the Polysar Research and Development building in Sarnia, Ontario. To simulate rain, the trays were sprayed for 10 seconds with water from a Hardi* RY2 back pack using a 4665-30 flat fan nozzle, under a back pack pressure This simulated 0.5 cm of rain. The nozzle was kept at 25 cm above each tray. The back pressure may be 1.4 $Kg/cm^2$ (20 psi). * Trademark

After waiting 10 minutes for all the trays to drain, a second pass was made spraying each tray with 0.5 cm of water. The next day the procedure was repeated. The trays were left for two days, during which there was no rainfall, to further crust the soil. The trays were then taken indoors and the penetration resistance of the:

(1) coated soil;
(2) film of compound; and
(3) of the soil below the film, was measured with a Chatillon R* penetrometer. * Trademark

The results are set forth in Table I.

The coating of compound at cost weight of 0.055 $Kg/m^2$ could not be removed from the tray to be tested. (0.055 $Kg/m^2$ = 0.18 oz/ft$^2$)

It was noted in the spraying that the trays 4 to 8 drained almost as rapidly as the water was applied. Trays 1 to 4 took from 20 seconds to 1 minute after spraying for the surface water to drain into the soil.

From Table 1 it is clear that treating the soil with up to 0.153 Kg/m$^2$ * (* 0.153 Kg/m$^2$ = 0.5 oz/ft$^2$) of compound results in a reduced penetration over untreated soil. It is also clear that the penetration of the soil beneath the compound is significantly reduced at application weight over 0.153Kg/m$^2$.

The net effect of soil and compound penetration at 0.153Kg/m$^2$ is comparable to untreated soil.

Figure 1 is a plot of the penetration resistance of the coated soil, to the nearest 10 grams as a function of wet coat weight.

TABLE I

| TRAY NO. | 1 | 2 | 3 | 4 | 5 | 6 | 7 | 8 |
|---|---|---|---|---|---|---|---|---|
| APPLICATION WEIGHT WET GRAMS | 0 | 0 | 7 | 11 | 16 | 20 | 30 | 31 |
| APPLICATION WEIGHT OZ/SQ.FT. DRY WEIGHT | 0 | 0 | 0.18 | 0.28 | 0.40 | 0.50 | 0.75 | 0.78 |
| APPLICATION WEIGHT $Kg/m^2$ DRY WEIGHT | O | O | 0.05 | 0.08 | 0.12 | 0.15 | 0.23 | 0.24 |
| PENETRATION RESISTANCE GRAMS-CASE 1 | 310 | 150 | 350 | 180 | 230 | 270 | 300 | 290 |
|  | 330 | 150 | 110 | 190 | 190 | 160 | 290 | 380 |
|  | 330 | 260 | 280 | 150 | 180 | 330 | 330 | 270 |
|  | 210 | 180 | 250 | 150 | 180 | 390 | 360 | 320 |
|  | 210 | 320 | 280 | 140 | 200 | 160 | 290 | 450 |
|  | 150 | 350 | 250 | 190 | 190 | 270 | 310 | 400 |
|  | 180 | 300 | 180 | 80 | 200 | 200 | 180 | 330 |
|  | 300 | 170 | 180 | 130 | 170 | 180 | 320 | 390 |
|  | 280 | 260 | 180 | 90 | 210 | 210 | 260 | 370 |
|  | 210 | 390 | 260 | 90 | 280 | 280 | 240 | 260 |
| AVE. RESISTANCE TO NEAREST 10 GRAMS | 250 | 250 | 230 | 140 | 200 | 240 | 290 | 350 |
| AVE. RESISTANCE LB/SQ. INCH | 11.0 | 11.0 | 10.1 | 6.2 | 8.8 | 10.6 | 12.8 | 15.4 |
| AVE. RESISTANCE KPa | 75.8 | 75.8 | 69.6 | 42.7 | 60.7 | 73.1 | 88.3 | 106.2 |
| AVE.RESISTANCE $Kg/cm^2$ | 0.77 | 0.77 | 0.71 | 0.44 | 0.62 | 0.74 | 0.9 | 1.08 |

0 288 271

TABLE 1 (cont.)

| TRAY NO. | 1 | 2 | 3 | 4 | 5 | 6 | 7 | 8 |
|---|---|---|---|---|---|---|---|---|

PENETRATION RESISTANCE GRAMS-CASE 2 (PENETRATION OF MULCH FILM WHEN REMOVED FROM SOIL)

| | 1 | 2 | 3 | 4 | 5 | 6 | 7 | 8 |
|---|---|---|---|---|---|---|---|---|
| | | | | | 50 | 70 | 80 | 150 |
| | | | | | 40 | 40 | 80 | 160 |
| | | | | | 60 | 80 | 120 | 160 |
| | | | | | 40 | 80 | 130 | 110 |
| | | | | | 30 | 60 | 90 | 140 |
| | | | | | 40 | 80 | 110 | 130 |
| | | | | | 30 | 60 | 80 | 160 |
| | | | | | 40 | 50 | 70 | 130 |
| | | | | | 30 | 40 | 120 | 160 |
| | | | | | 40 | 50 | 90 | 150 |
| AVE. RESISTANCE TO NEAREST 10 GRAMS | | | LESS | 30 | 40 | 60 | 100 | 140 |
| AVE. RESISTANCE LB/SQ. INCH | | | LESS | 1.3 | 1.8 | 2.6 | 4.4 | 6.2 |
| AVE. RESISTANCE KPa | | | LESS | 9.0 | 12.4 | 17.9 | 30.3 | 42.7 |
| AVE. RESISTANCE $Kg/cm^2$ | | | LESS | 0.09 | 0.13 | 0.18 | 0.31 | 0.44 |

PENETRATION RESISTANCE GRAMS-CASE 3 (PENETRATION RESISTANCE OF SOIL AFTER REMOVAL OF MULCH FILM)

| | 1 | 2 | 3 | 4 | 5 | 6 | 7 | 8 |
|---|---|---|---|---|---|---|---|---|
| | | | | 130 | 130 | 130 | 120 | 120 |
| | | | | 130 | 90 | 100 | 130 | 120 |
| | | | | 140 | 130 | 130 | 80 | 90 |
| | | | | 110 | 130 | 80 | 120 | 100 |
| | | | | 110 | 90 | 90 | 100 | 80 |
| | | | | 90 | 120 | 120 | 130 | 100 |
| | | | | 130 | 130 | 110 | 90 | 130 |
| | | | | 90 | 130 | 120 | 110 | 120 |
| | | | | 130 | 120 | 110 | 130 | 80 |
| | | | | 100 | 110 | 100 | 130 | 130 |
| AVE. RESISTANCE TO NEAREST 10 GRAMS | | | | 120 | 120 | 110 | 110 | 100 |
| AVE. RESISTANCE LB/SQ. INCH | | | | 5.3 | 5.3 | 4.8 | 4.8 | 4.4 |
| AVE. RESISTANCE KPa | | | | 36.5 | 36.5 | 33.1 | 33.1 | 30.3 |
| AVE. RESISTANCE $Kg/cm^2$ | | | | 0.37 | 0.37 | 0.34 | 0.34 | 0.31 |

0 288 271

EXAMPLE 2

A further series of 4-25x25x8 cm trays was prepared as above. One tray was coated with a compound of the same formulation as used in Example 1 at a wet coat weight of 30 gm or 0.23 dry weight Kg/m²** (*0.23 Kg/m² = 0.75 oz/ft²). A second tray was coated at a wet weight coat of 30 gm/tray with an emulsion formulation for the latex used in Example 1 except that the monomer and modifier were not added. This was to determine if the non polymeric ingredients in the compounds of the invention contributed to the reduction in soil crusting. The third tray was coated with a compound of an aqueous solution of the non monomeric and non modifier ingredients of the latex of Example 1 and compounding ingredients in accordance with the formulations used in Example 1. To obtain penetration control over the aqueous solution of non monomeric and non modifier ingredients of the latex of Example 1, and the compound thereof, it was necessary to add a thickener to bring the viscosity up to the 800 to 900 cps range as was the case for Example 1. The prepared trays were then sprayed with water as in Example 1. It should be noted that the "compounds" without polymer used in this example did not form a crust on the surface of the soil. Due to the lack of polymer these compounds had a lower dry coat weight than those in Experiment 1.

The penetration resistance of the treated soil and where it existed the film, and the soil beneath the film was measured 10 times except for the serum experiment where 20 measurements were made. For the tray treated as in Example 1 the penetration of the soil with the film removed and the penetration of the film were also measured. The results are set forth in Table 2 which shows that a binder is necessary to obtain the reduction in penetration resistance of soil in accordance with the present invention.

### TABLE 2

| Compound Per Example 1 | | | "Serum" Treated Soil | | "Serum Compound" Treated soil |
|---|---|---|---|---|---|
| Treated Soil | Soil without film | Film | | | |
| 260 | 130 | 110 | 310 | 290 | 580 |
| 250 | 130 | 120 | 190 | 330 | 330 |
| 420 | 100 | 100 | 420 | 400 | 360 |
| 310 | 120 | 150 | 550 | 330 | 490 |
| 240 | 200 | 110 | 390 | 450 | 540 |
| 390 | 160 | 120 | 250 | 220 | 430 |
| 360 | 180 | 110 | 230 | 360 | 350 |
| 280 | 150 | 130 | 590 | 270 | 280 |
| 280 | 160 | 120 | 390 | 440 | 460 |
| 300 | 180 | 140 | 360 | 570 | 400 |
| Mean penetration resistance (nearest 10g) | 310 g | 150 g | 120 g | 370 g | | 420 g |

The numerical values used in this specification's description and/or claims include the precise values and quantities that are about or substantially the same as the precise values. It will be appreciated that high solids aqueous based pressure sensitive adhesives may be prepared by directly emulsifying the tackifier resin into a polymeric latex provided the tackifier is heated, plasticized and emulsified and mixed with the latex on a high shear mixer. This gives an adhesive which is faster drying and gives comparable properties to lower solids adhesives. 0.06 to 0.14 Kg/m² = 0.2 to 0.45 oz/ft². 0.08 to 0.12 Kg/m² = 0.25 to 0.4 oz/ft².

## Claims

1. A process to maintain the penetration resistance of a treated surface of a soil having a small particle size from 140 to 240 grams as measured by a penetration resistance probe, characterized by applying from 0.06 to 0.14 $Kg/m^2$, by dry weight, of a compound comprising per 100 parts by dry weight of an aqueous dispersion or emulsions, containing from 35 to 70 weight percent of one or more film forming polymers having a Tg of less than 35°C and selected from :

a) polymers of: from 20 to 80 weight percent of a $C_{4-6}$ conjugated diolefin, which may be unsubstituted or substituted by a chlorine atom; from 80 to 20 weight percent of a mixture comprising: from 100 to 60 weight percent of a $C_{8-12}$ vinyl aromatic monomer which may be unsubstituted or substituted by a $C_{1-4}$ alkyl radical or a chlorine or bromine atom; and up to 40 weight percent of a $C_{3-8}$ alkenyl nitrile; and optionally from 0.5 to 10 weight percent of one or more monomers selected from :

i) $C_{3-9}$ ethylenically unsaturated carboxylic acids or $C_{1-8}$ alkyl or $C_{1-8}$ alkanol esters thereof:

ii) $C_{3-9}$ ethylenically unsaturated aldehydes

iii) amides of $C_{3-9}$ ethylenically unsaturated acids which may be unsubstituted or substituted at the nitrogen atom by up to two $C_{1-4}$ alkyl or $C_{1-4}$ alkanol radicals;

b) polymers of: from 1 to 40 weight percent of at least one $C_{2-4}$ mono olefin; from 99 to 60 weight percent of a $C_{2-8}$ alkenyl or alkenol ester of a $C_{1-8}$ saturated carboxylic acid; $C_{1-8}$ alkyl and alkanol esters of $C_{3-6}$ ethylenically unsaturated carboxylic acids, and optionally from 0.5 to 10 weight percent of one or more monomers selected from :

i) $C_{3-9}$ ethylenically unsaturated carboxylic acids or $C_{1-8}$ alkyl or $C_{1-8}$ alkanol esters thereof:

ii) $C_{3-9}$ ethylenically unsaturated aldehydes;

iii) amides of $C_{3-9}$ ethylenically unsaturated acids which may be unsubstituted or substituted at the nitrogen atom by up to two $C_{1-4}$ alkyl or $C_{1-4}$ alkanol radicals;

c) polymers of: from 60 to 99.5 weight percent of a $C_{1-8}$ alkyl or alkanol ester of acrylic or methacrylic acid; and from 0.5 to 40 weight percent of a $C_{3-8}$ ethylenically unsaturated carboxylic acid;

d) polymers of: from 5 to 35 weight percent of a $C_{3-8}$ alkenyl nitrile; from 95 to 65 weight percent of a $C_{4-6}$ conjugated diolefin; and optionally from 0.5 to 10 weight percent of one or more monomers selected from :

i) $C_{3-9}$ ethylenically unsaturated carboxylic acids or $C_{1-8}$ alkyl or $C_{1-8}$ alkanol esters thereof:

ii) $C_{3-9}$ ethylenically unsaturated aldehydes

iii) amides of $C_{3-9}$ ethylenically unsaturated acids which may be unsubstituted or substituted at the nitrogen atom by up to two $C_{1-4}$ alkyl or $C_{1-4}$ alkanol radicals.

e) polyvinyl chloride;

f) copolymers of ethylene and propylene; and from 75 to 800 parts by weight of a particulate filler.

2. A process as in claim 1, characterized by said particulate filler is selected from : calcium carbonate, clay, stone dust, carbon black, micaflakes, slaked lime, wood flour, sawdust, cellulose, starch or a mixture thereof.

3. A process as in claim 2, characterized by said particulate filler is present in said compound in an amount from 300 to 600 parts by weight per 100 parts by weight of said polymer.

4. A process as in claim 3, characterized by said compound is applied to provide a dry coat weight from 0.08 to 0.12 $Kg/m^2$.

5. A process as in claim 4, characterized by said polymer has a Tg of less than 20°C.

6. A process as in claim 3, characterized by said polymer comprises from 20 to 35 weight percent of one or more monomers selected from : styrene and alpha methyl styrene; from 79.5 to 55 weight percent of at least one monomer selected from: butadiene, isoprene, and chlorinated isoprene; and from about 0.5 to about 10 weight percent of at least one monomer selected from : acrylic acid, methacrylic acid, fumaric acid, itaconic acid, cinnamic acid, methyl acrylate, methyl methacrylate, ethyl acrylate, ethyl methacrylate, hydroxy ethyl acrylate, hydroxy ethyl methacrylate, ethylhexyl acrylate, ethylhexyl methacrylate, acrylamide, N-methyl acrylamide, N-ethyl acrylamide, methylacrylamide, N-methyl methylacrylamide, N-ethyl methacrylamide, N-methylol acrylamide, N-methylol methacrylamide, acrolein, methacrolein and cininamaldehyde.

7. A process as in claim 3, characterized by said polymer comprises from 10 to 25 weight percent of a monomer selected from : ethylene and propylene; from 90 to 75 weight percent of vinyl acetate; and from 0.5 to about 10 weight percent of at least one monomer selected from : acrylic acid, methacrylic acid, fumaric acid, itaconic acid, cinnamic acid, methyl acrylate, methyl methacrylate, ethyl acrylate, ethyl methacrylate, hydroxy ethyl acrylate, hydroxy ethyl methacrylate, ethylhexyl acrylate, ethylhexyl methacrylate, acrylamide, N-methyl acrylamide, N-ethyl acrylamide, methylacrylamide, N-methyl methylacrylamide, N-ethyl methacrylamide, N-methylol acrylamide, N-methylol methacrylamide, acrolein, methacrolein and cininamaldehyde.

8. A process as in claim 3, characterized by said polymer comprises:

a) polymers of: from 20 to 80 weight percent of a $C_{4-6}$ conjugated diolefin, which may be unsubstituted or substituted by a chlorine atom; from 80 to 20 weight percent of a mixture comprising: from 100 to 60 weight percent of a $C_{8-12}$ vinyl aromatic monomer which may be unsubstituted or substituted by a $C_{1-4}$ alkyl radical or a chlorine or bromine atom; and up to 40 weight percent of a $C_{3-8}$ alkenyl nitrile; and optionally from 0.5 to 10 weight percent of one or more monomers selected from :

i) $C_{3-9}$ ethylenically unsaturated carboxylic acids or $C_{1-8}$ alkyl or $C_{1-8}$ alkanol esters thereof:

ii) $C_{3-9}$ ethylenically unsaturated aldehydes

iii) amides of $C_{3-9}$ ethylenically unsaturated acids which may be unsubstituted or substituted at the nitrogen atom by up to two $C_{1-4}$ alkyl or $C_{1-4}$ alkanol radicals;

9. A process as in claim 3, characterized by said polymer is a copolymer of ethylene and propylene.

10. A process as in claim 3, characterized by said polymer is a polymer of vinyl chloride.

Fig.1.